# EUROPEAN PATENT SPECIFICATION

(11) **EP 3 258 130 B1**
(45) Date of publication and mention of the grant of the patent: **26.06.2019**
(21) Application number: 17000782.7
(22) Date of filing: 08.05.2017
(51) Int. Cl.: F16F 9/58, F16F 9/49, F16F 9/32

(54) **HYDRAULIC DAMPER WITH A HYDRO-MECHANICAL COMPRESSION STOP ASSEMBLY**
HYDRAULIKDÄMPFER MIT EINER HYDROMECHANISCHEN KOMPRESSIONSANSCHLAGANORDNUNG
AMORTISSEUR HYDRAULIQUE AYANT UN ENSEMBLE DE BUTÉE DE COMPRESSION HYDROMÉCANIQUE

(30) Priority: 13.05.2016 US 201662335907 P; 18.04.2017 US 201715490840
(43) Date of publication of application: 20.12.2017
(73) Proprietor: BeijingWest Industries Co. Ltd., Beijing, (CN)
(72) Inventor: Grzesik, Radoslaw Pawel, 30-399 Kraków (PL); Flacht, Piotr Andrzej, 30-399 Kraków (PL); Wrzesinski, Jakub, 30-399 Kraków (PL)
(74) Representative: Lukaszyk, Szymon

(56) References cited:
- ES-A1- 2 152 798
- US-A- 2 527 034
- US-A- 3 036 669

## Description

The invention relates to a hydraulic damper, in particular a motor vehicle hydraulic suspension damper, comprising a tube filled with working liquid, a piston assembly disposed slidably inside the tube, dividing the tube into a rebound chamber and a compression chamber, provided with a rebound and compression valve assemblies to control the flow of working liquid within the tube during rebound and compression stroke of the damper, and attached to a piston rod led outside the damper, a fluid compensation chamber located outside of the tube, a base valve assembly located at the end of the compression chamber for controlling the flow of working fluid between the compression chamber and the compensation chamber, and a hydro-mechanical compression stop assembly to generate an additional damping force at the end of the compression stroke and comprising a covering member disposed in said compression chamber and comprising at least one main flow channel, at least one auxiliary flow channel between the compression chamber and the compensation chamber, a spring slidable along with the piston assembly and at its end distal to the piston assembly connected with means apt to close said at least one main flow channel while engaging said covering member.

### Background of the Invention

Such a hydro-mechanical compression stop assembly enables for generation of an additional damping force depending mainly on the position of the piston rod and feature very progressive increase of damping force in dependence of the rod displacement. Exemplary dampers provided with such a hydro-mechanical compression stop assemblies provided with a spring engaging a covering member and closing its main flow channel are disclosed in patent publications US2619199 or US2729308.

Axial position of a spring is critical for the operation of hydro-mechanical compression stops. If the spring buckles as a result of repeated stop engagements or otherwise deviates from its axial position, means designed to close the main flow channel, usually in a form of a closing shield attached to the spring, may not entirely close this channel yielding unpredictable results.

It has been the object of the present invention to provide a hydraulic damper with a hydro-mechanical compression stop assembly providing high and progressive increase of damping force in dependence of the rod displacement featuring an improved axial stability, that would be of a simple construction, cost efficient and simple to manufacture.

It has been yet another object of the present invention to provide a hydraulic damper with a hydro-mechanical compression stop assembly enabling for maximizing available compression stroke length.

Document ES2152798 A1 discloses a hydraulic compression stopper for dampers. In standard hydraulic dampers, both of the single-tube and dual-tube type, there is a piston connected to an activation piston rod. Defined are two chambers: an expansion or traction chamber and a compression chamber, flooded with liquid; the oil passes from one to the other through calibrated holes and valves existing in the piston, due to the elevation and descending movements of the corresponding wheels. This known hydraulic compression stopper includes hydraulic compression stoppers to dampen the sudden shock produced by the passage of the wheel through a spring. The load of the compression chamber is increased in order to stop the brisk movement of the piston rod and by installing in said compression chamber a free control piston assisted by a spring that pushes it against a closing socket next to the tip of the piston rod. The socket has a central hole and other calibrated peripheries, as well as front elastic extensions with oil passage that can be deformed during compression. Three sub-chambers are formed and whose passages successively close when the piston rod moves.

Document US 3036669 A discloses a hydraulic shock absorber with compression cut-off. This known hydraulic shock absorber includes means in the compression chamber of the shock absorber to highly restrict, and practically cut off, flow of fluid from the compression chamber during a compression stroke of abnormal extent and thereby avoid, the vehicle striking the bump stops provided on the axles of the vehicle. This is accomplished by providing an auxiliary cylinder means in the compression chamber of the shock absorber that is spaced from the cylinder tube of the shock absorber, an auxiliary piston being slidable in the shock absorber cylinder and positioned between the shock absorber cylinder and the auxiliary cylinder and cooperating therewith to form an auxiliary compression chamber from which compressed fluid is allowed to escape under controlled flow through resistance passage means provided between the auxiliary piston and the auxiliary cylinder as the piston moves downwardly over the cylinder, the resistance passage means gradually closing off flow of compressed fluid from the auxiliary compression chamber to thereby gradually increase resistance to movement of the shock absorber piston and rod assembly into the shock absorber cylinder and finally substantially cut off the flow of fluid from the auxiliary compression chamber.

According to a first aspect of the invention, there is provided a hydraulic damper as defined in the appended Claim 1.

Such an openwork construction of the sleeve provides a simplicity of construction and enables for a convenient snap-on assembly of the telescopic arrangement.

Preferably said covering member comprises at least one main flow channel located at the center thereof.

Preferably said covering member further comprises said at least one auxiliary flow channel, preferably in the vicinity of the internal surface of the damper tube. Preferably the cross-sectional flow surface of all the auxiliary flow channels is smaller than the cross-sectional flow surface of all the main flow channels.

Preferably the end of the spring proximal to the piston assembly is disposed in an internal chamber of the piston assembly.

The internal chamber provides further opportunity to maximize available compression stroke length.

Preferably said telescopic arrangement is slidably attached to a radially outwardly extending flange of a shoulder nut securing the piston assembly on the piston rod.

The hydraulic stop arrangement according to the present invention may be easily configured to generate additional damping force for compression stroke enabling for wide range tuning of the force gains, wherein the performance of the arrangement may depend both on the piston position (mechanical response of the spring) as well as on the piston velocity (hydraulic response generated by the auxiliary flow channels).

### Brief description of drawings

The invention shall be described and explained below in connection with the attached drawings on which:
Fig. 1 is a schematic cross-sectional view of a twin-tube damper according to the present invention provided with an embodiment of a hydro-mechanical compression stop,
Fig. 2 is a schematic cross-sectional view illustrating the operation of a hydro-mechanical compression stop shown in Fig. 1 in a disengaged position during damper compression stroke (Fig. 2a), an engaged position during damper compression stroke (Fig. 2b), the final engaged position during damper compression stroke (Fig. 2c), and an engaged position during damper rebound stroke (Fig. 2d),
Fig. 3 is a schematic cross-sectional perspective view of a hydro-mechanical compression stop shown in Fig. 1 in disengaged position (Fig. 3a) and final engaged position during damper compression stroke (Fig. 3b), and
Fig. 4 is a schematic cross-sectional view illustrating another embodiment of a hydro-mechanical compression stop.

### Detailed description of preferred embodiments

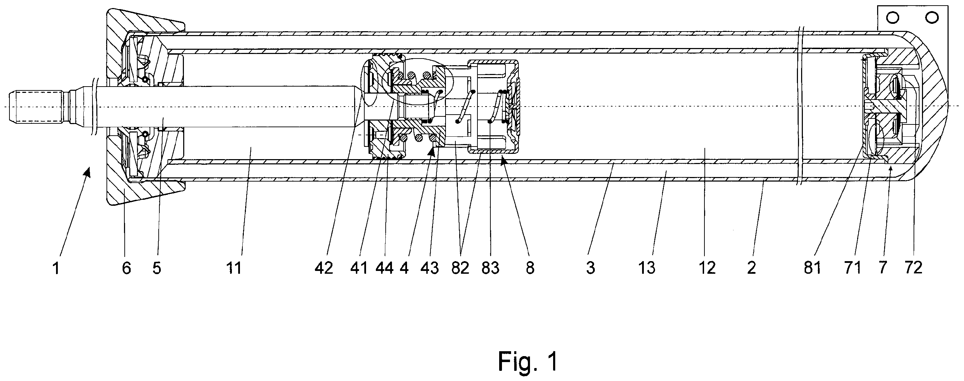

Fig. 1 presents an embodiment of a twin-tube damper 1 according to the present invention that may be employed in a typical motor vehicle suspension. The damper 1 comprises an external tube 2 and a main tube 3 filled with viscous working liquid inside of which a movable piston assembly 4 attached to a piston rod 5 led outside the damper 1 through a sealed piston rod guide 6 is disposed. The damper 1 is also provided with a base valve assembly 7 fixed at the other end of the main tube 3. The piston assembly 4 makes a sliding fit with the inner surface of the main tube 3 and divides the tube 3 into a rebound chamber 11 (between the piston rod guide 6 and the main piston assembly 4) and a compression chamber 12 (between the piston assembly 4 and the base valve assembly 7). An additional compensation chamber 13 is located at the other side of the base valve assembly 7.

As known to those skilled in the art the piston assembly 4 is provided with compression 42 and rebound 41 valve assemblies to control the flow of working liquid passing between the rebound chamber 11 and the compression chamber 12 while the piston assembly 4 is in motion. The piston assembly 4 comprises a piston body 44 secured on the piston rod 5 by means of a shoulder nut 43 screwed on a threaded end of the rod 5. Also the base valve assembly 7 is provided with rebound 71 and compression 72 valve assemblies to control the flow of working liquid passing between the additional compensation chamber 13 and the compression chamber 12, respectively, during rebound and compression stroke of the damper 1. Valve assemblies 41, 42 and 71, 72 provide design parameters that may be used to shape desired characteristic of the damper 1.

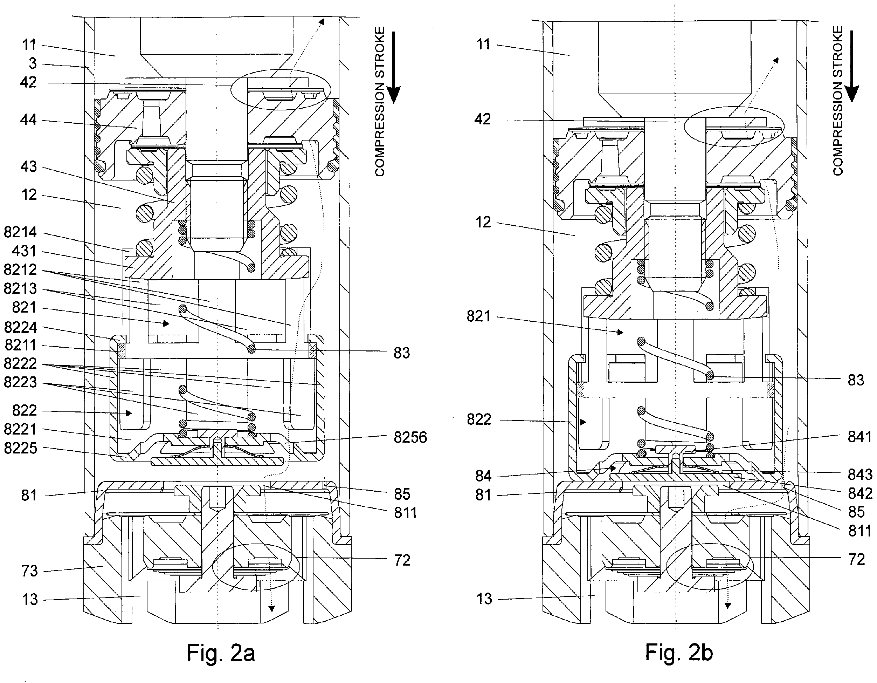

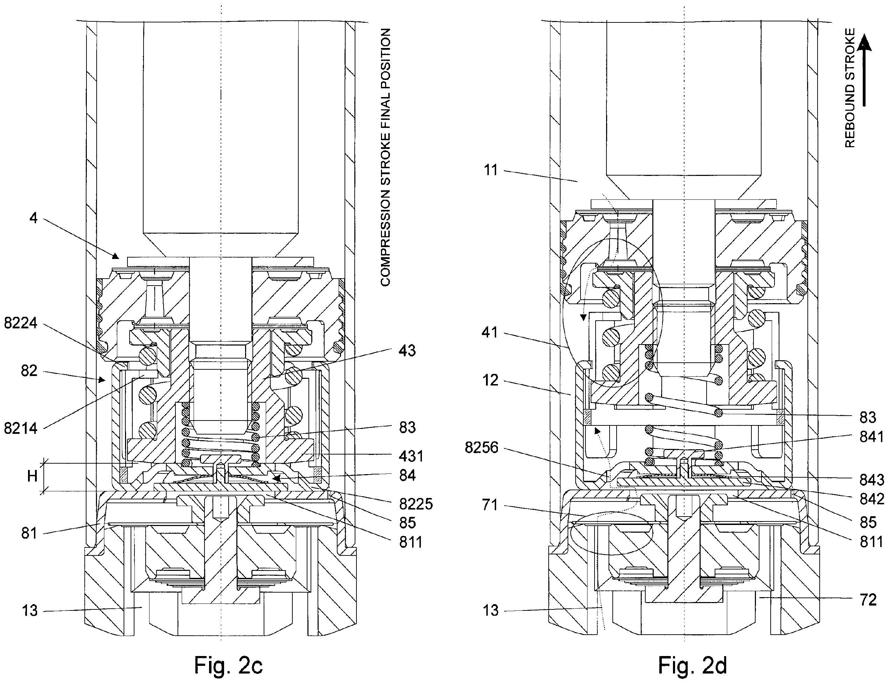

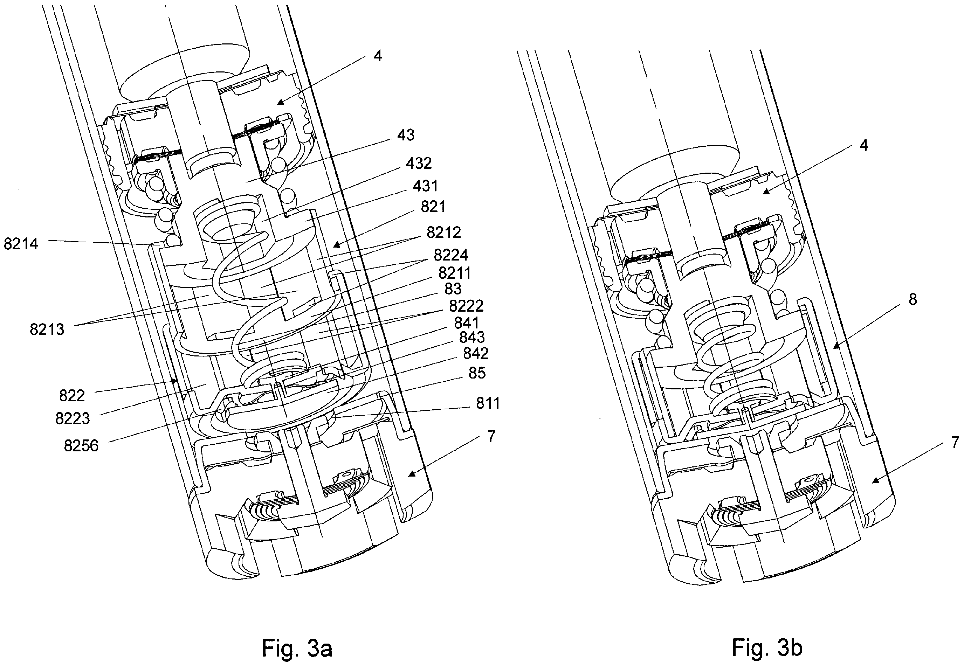

In the compression chamber 12 a hydro-mechanical compression stop assembly 8 is disposed. The assembly 8 comprises a covering member 81 attached to the base valve assembly 7, a telescopic arrangement 82 attached slidably to the piston assembly 4 and a spring 83 disposed within the telescopic arrangement 82. Its functionality shall be explained later, in particular with reference to Figs. 2 and 3.

As shown in Fig. 2a and Fig. 3a, illustrating a part of the damper shown in Fig. 1, in this embodiment the telescopic arrangement 82 comprises only two cylindrical sleeves 821 and 822 of an openwork construction.

The first sleeve 821 is provided with an annular ring 8211 from which six axial bridges 8212 extend to the shoulder nut 43 defining six axial slots 8213 in between them. At the other ends the bridges 8212 are terminated with radial lips 8214 radially engaging a radially outwardly extending flange 431 of the shoulder nut 43 of the piston assembly 4. Thanks to that the sleeve 821 may displace between this flange 431 and the piston body 44. During the assembly of the damper the lips 8214 were simply radially extended to snap the sleeve 821 over the flange 431 of the shoulder nut 43.

The second or engaging sleeve 822 has the diameter larger than the diameter of the first sleeve 821 and is also provided with an annular ring 8221 from which six axial bridges 8222 extend to the first sleeve 821 defining six axial slots 8223 in between them. At the other ends the bridges 8222 are terminated with radial lips 8224 radially engaging the annular ring 8211 between the bridges 8212 of the first sleeve 821. Thanks to that the engaging sleeve 822 may also displace between the annular ring 8211 of the movable first sleeve 821 and the piston body 44. During the assembly of the damper the lips 8224 were also simply radially extended to snap the sleeve 822 over the annular ring 8211 of the first sleeve 821.

The spring 83 compressed between the shoulder nut 43 and a base 8225 of the engaging sleeve 822 maintains an extended position of the telescopic arrangement 82.

The shaped covering member 81 is fixed between a body 73 of the base valve assembly 7 and the damper tube 3. The covering member 81 comprises main flow channel 811 located at the center thereof and three auxiliary flow channels 85 equiangularly disposed over the perimeter of its face close to the internal surface of the damper tube 3. Cross-sectional flow surface of the auxiliary flow channels 85 is obviously smaller than the cross-sectional flow surface of the main flow channel 811.

As illustrated with dashed arrow during compression stroke of the damper, while the hydro-mechanical compression stop 8 remains in a disengaged position, working liquid flows from the compression chamber 12 to the rebound chamber 11, through the compression valve assembly 42 of the piston assembly 4. Due to the presence of the piston rod 5 in the rebound chamber 11, the increasing volume of the rebound chamber 11 does not compensate accordingly decreasing volume of the compression chamber 12. Therefore working liquid flows also from the compression chamber 12 to the compensation chamber 13. As illustrated with dashed arrow it flows around and through the telescopic arrangement 82, including a number of equiangularly spaced channels in the form of radial slots 8256 provided in the base of the engaging sleeve 822, further through the main flow channel 811 of the covering member 81 and subsequently through the compression valve assembly 72 of the base valve assembly 7.

As shown in Fig. 2b, in this embodiment the hydro-mechanical compression stop 8 also comprises a closing member 84 disposed slidably within a hole of the base 8225 of the engaging sleeve 822. The closing member 84 comprises a closing shield 842 apt to cover the main flow channel 811 of the covering member 81, a pin 841 screwed on a threaded protrusion of the closing shield 842 and securing the shield 842 from inside the telescopic arrangement 82, and a coned-disc spring 843 disposed between the closing shield 842 and the base 8225 of the engaging sleeve 822 to maintain an extended position of the closing member 84, as shown in Fig. 2a.

As illustrated with dashed arrow during compression stroke of the damper, while the telescopic arrangement 82 engages the covering member 81, the closing shield 842 covers the main flow channel 811 of the covering member 81 and working liquid may now flow from the compression chamber 12 only through the smaller auxiliary flow channels 85 before it reaches the compensation chamber 13 through the compression valve assembly 72. This flow restrictions obviously generate additional damping force due to the working liquid viscous friction, which force also increases linearly due to the reaction force of the spring 83, along with the decreasing height of the telescopic arrangement 82.

Fig. 2c and Fig. 3b illustrate a final engagement position of the hydro-mechanical compression stop 8 where the flow of working liquid is no longer possible. This position should not take place in practical applications, as the stop 8 should be able to dissipate all the kinetic energy much sooner in any of the intermediate engaging positions illustrated on Fig. 2b. Nonetheless this final engagement position illustrates the capabilities of the stop 8 with regard to the compression stroke limitations. As shown the piston assembly 4 during the compression stroke is able to reach almost the same position it could reach without the hydro-mechanical compression stop 8. Residual height H that is unavailable for the piston assembly 4 is mainly determined only by the thickness of the base 8225 of the engaging sleeve 822 and, in this embodiment, also by the closing member 84.

Almost entirely compressed internal spring 83 is now disposed in an internal chamber 432 provided within the shoulder nut 43. The internal chamber 432 also provides a torque application surface (cf. Fig. 3) for a hex key used to screw the nut 43 over the piston rod 5 in order to fix all the components of the piston assembly 4 together.

As illustrated in Fig. 2d when the stroke of the damper changes to rebound the working liquid pressure of in the compensation chamber 13 pushes the closing shield 842 of the closing member 84 against the small pressure of the spring 843 in the rebound direction opening the main flow channel 811, even though the base 8225 pushed by the spring 83 still adjoins the covering member 81. Thanks to that working liquid may flow again from the compensation chamber 13 to the compression chamber 12 through the rebound valve assembly 71 of the base valve assembly 7, through the main flow channel 811 and through the radial slots 8256, as well as from the rebound chamber 11 to the compression chamber 12 through the rebound valve assembly 41 of the piston assembly 4.

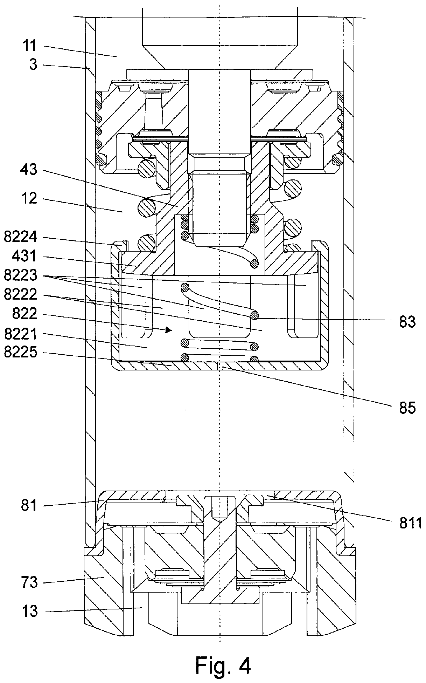

Fig. 4 illustrates another embodiment the hydro-mechanical compression stop assembly 8 having a telescopic arrangement containing only one sleeve 822 provided with a central auxiliary flow channel 85 in its base 8225.

The above embodiments of the present invention are merely exemplary.

### List of reference numerals

- 1.: damper
11 rebound chamber
12. compression chamber
13. compensation chamber
- 2.: external tube
- 3.: main tube
- 4.: piston assembly
41. rebound valve assembly
42. compression valve assembly
43. shoulder nut
431. flange
432. internal chamber
44. piston body
- 5.: piston rod
- 6.: piston rod guide
- 7.: base valve assembly
71. rebound valve assembly
72. compression valve assembly
73. body
- 8.: hydro-mechanical compression stop assembly
81. covering member
811. main flow channel
82. telescopic arrangement
821. first sleeve
8211. annular ring
8212. axial bridge
8213. axial slot
8214. radial lip
822. engaging (second) sleeve
8221. annular ring
8222. axial bridge
8223. axial slot
8224. radial lip
8225. base
8256. channel (radial slot)
83. spring
84. closing member
841. pin
842. closing shield
843. spring
85. auxiliary flow channel

## Claims

1. A hydraulic damper (1), in particular a motor vehicle hydraulic suspension damper, comprising a tube (3) filled with working liquid, a piston assembly (4) disposed slidably inside the tube (3), dividing the tube into a rebound chamber (11) and a compression chamber (12), provided with a rebound (41) and compression (42) valve assemblies to control the flow of working liquid within the tube during rebound and compression stroke of the damper (1), and attached to a piston rod (5) led outside the damper (1), a fluid compensation chamber (13) located outside of the tube (3), a base valve assembly (7) located at the end of the compression chamber (12) for controlling the flow of working fluid between the compression chamber (12) and the compensation chamber (13), and a hydro-mechanical compression stop assembly (8) to generate an additional damping force at the end of the compression stroke and comprising
a covering member (81) disposed in said compression chamber (12) and comprising at least one main flow channel (811),
at least one auxiliary flow channel (85) between the compression chamber (12) and the compensation chamber (13),
a spring (83) slidable along with the piston assembly (4) and at its end distal to the piston assembly (4) connected with means apt to close said at least one main flow channel (811) while engaging said covering member (81),
wherein said hydro-mechanical compression stop assembly (8) further comprises
a telescopic arrangement (82) attached slidably to the piston assembly (4) and comprising at least one sleeve (821, 822), wherein the sleeve most distal to said piston assembly (4) is an engaging sleeve (822) and said means apt to close said at least one main flow channel (811) are provided on the base (8225) of said engaging sleeve (822), wherein said spring (83) is compressed between the piston assembly (4) and said base (8225) to maintain an extended position of said telescopic arrangement (82) in its disengaged position,
**characterized in that**, said base (8225) of said engaging sleeve (822) is provided with at least one channel (8256) and a closing member (84) disposed slidably within said base (8225) of said engaging sleeve (822) and provided with a closing shield (842), apt to close said at least one main flow channel (811) while engaging said covering member (81), and a spring (843) disposed between said closing shield (842) and said base (8225) to maintain an extended position of said closing shield (842),
wherein at least one sleeve (821, 822) of said telescopic arrangement (82) is a single element having an annular ring (8211, 8221) joined with a number of preferably equiangularly disposed axial bridges (8212, 8222) terminated with radial lips (8214, 8224) for radial engagement with the piston assembly (4) or the adjoining sleeve of the telescopic arrangement (82), and
wherein said covering member (81) is attached to the base valve assembly (7).

2. The damper according to any of the preceding Claims, **characterized in that**, said covering member (81) comprises said at least one main flow channel (811) located at the center thereof.

3. The damper according to any of the preceding Claims, **characterized in that**, said covering member (81) comprises said at least one auxiliary flow channel (85), preferably in the vicinity of the internal surface of the damper tube (3).

4. The damper according to any of the preceding Claims, **characterized in that**, the cross-sectional flow surface of all the auxiliary flow channels (85) is smaller than the cross-sectional flow surface of all the main flow channels (811).

5. The damper according to any of the preceding Claims, **characterized in that**, the end of the spring (83) proximal to the piston assembly (4) is disposed in an internal chamber (432) of the piston assembly (4).

6. The damper according to any of the preceding Claims, **characterized in that**, said telescopic arrangement (82) is slidably attached to a radially outwardly extending flange (431) of a shoulder nut (43) securing the piston assembly (4) on the piston rod (5).

## Patentansprüche

1. Ein hydraulischer Dämpfer (1), insbesondere ein Dämpfer der hydraulischen Federungen des Kraftfahrzeuges, umfassend ein mit Betriebsflüssigkeit gefülltes Rohr (3), eine Kolbenbaugruppe (4), die gleitbeweglich innerhalb des Rohres (3) angeordnet ist, aufteilend das Rohr in eine Rückprallkammer (11) und eine Druckkammer (12), mit einem Rückprall- (41) und Druckventilbaugruppe (42) verseht um den Betriebsflüssigkeitstrom innerhalb des Rohres zu kontrollieren während Rückprall- und Druckhub des Dämpfers (1), und zu einer Kolbenstange (5) angefügt, die außen des Dämpfers (1) geleitet wird, eine Flüssigkeitsausgleichskammer (13), die außerhalb des Rohres (3) angeordnet ist, eine Bodenventilbaugruppe (7), die am Ende der Druckkammer (12) angeordnet ist, um den Betriebsflüssigkeitsstrom zwischen der Druckkammer (12) und der Ausgleichskammer (13) zu kontrollieren, und eine hydromechanische Druckanschlagsbaugruppe (8), um eine zusätzliche Dämpfungskraft am Ende des Druckhubs zu generieren, und umfassend ein Deckungsglied (81), der in der besagten Druckkammer (12) angeordnet ist, und umfasst mindestens einen Hauptfließkanal (811),
mindestens einen Auxiliarfließkanal (85) zwischen der Druckkammer (12) und die Ausgleichskammer (13),
eine Feder (83), verschiebbar entlang mit der Kolbenbaugruppe (4) und am ihrem Ende distal zur Kolbenbaugruppe (4) mit Mittel verbunden, die angepasst sind um den mindestens einen Hauptfließkanal (811) zu verschließen, gleichzeitig besagtes Deckungsglied (81) engagierend,
worin die besagte hydromechanische Druckanschlagsbaugruppe (8) ferner umfasst eine teleskopartige Ausrichtung (82), gleitbeweglich an der Kolbenbaugruppe (4) befestigt und umfassend mindestens eine Buchse (821, 822), worin die weitest von besagter Kolbenbaugruppe (4) entfernte Buchse ist eine Verbindungsbuchse (822) und besagte Mittel, die sind angepasst um den mindestens einen Hauptfließkanal (811) zu verschließen, sind erzeugt an der Basis (8225) besagter Verbindungsbuchse (822), worin besagte Feder (83) wird zwischen der Kolbenbaugruppe (4) und besagter Basis (8225) zusammengepresst, um eine verlängerte Position besagter teleskopartige Ausrichtung (82) in ihrer gelöster Position zu erhalten,
**dadurch gekennzeichnet, dass** besagte Basis (8225) besagter Verbindungsbuchse (822) ist verseht mit mindestens einem Kanal (8256) und einem Schließglied (84), gleitbeweglich innerhalb besagtem Basis (8225) besagter Verbindungsbuchse (822) angeordnet und mit einem Schließschild (842) verseht, der ist angepasst um den besagten mindestens einen Hauptfließkanal (811) zu verschließen, gleichzeitig besagtes Deckungsglied (81) engagierend, und mit einer Feder (843), die zwischen besagtem Schließschild (842) und besagter Basis (8225) angeordnet ist, um eine verlängerte Position besagtes Schließschilds (842) zu erhalten,
worin mindestens eine Buchse (821, 822) besagter teleskopartiger Ausrichtung (82) ein Einzelelement ist, verseht mit einem ringförmigen Ring (8211, 8221), der verbunden ist mit mehreren vorzugsweise gleichwinkelig angeordneten Axialbrücken (8212, 8222), mit radialen Lippen (8214, 8224) beendet, für radiales Einrasten mit der Kolbenbaugruppe (4) oder mit der anliegenden Buchse der teleskopartigen Ausrichtung (82), und
worin besagtes Deckungsglied (81) zur Bodenventilbaugruppe (7) angefügt ist.

2. Das Dämpfer nach einem der vorhergehenden Ansprüche, **dadurch gekennzeichnet, dass** das Deckungsglied (81) umfasst besagten mindestens einen Hauptfließkanal (811), der sich in seiner Mitte befindet.

3. Das Dämpfer nach einem der vorhergehenden Ansprüche, **dadurch gekennzeichnet, dass** besagtes Deckungsglied (81) umfasst besagten mindestens einen Auxiliarfließkanal (85), vorzugsweise in der Nähe von der inneren Oberfläche des Dämpferrohrs (3).

4. Das Dämpfer nach einem der vorhergehenden, **dadurch gekennzeichnet, dass** die Querschnittsströmungsleitfläche der allen Auxiliarfließkanäle (85) ist kleiner als die Querschnittsströmungsleitfläche aller der Hauptfließkanäle (811).

5. Das Dämpfer nach einem der vorhergehenden Ansprüche, **dadurch gekennzeichnet, dass** das Ende der Feder (83) proximal zur Kolbenbaugruppe (4) ist in einer inneren Kammer (432) der Kolbenbaugruppe (4) angeordnet.

6. Das Dämpfer nach einem der vorhergehenden Ansprüche, **dadurch gekennzeichnet, dass** besagte teleskopartige Ausrichtung (82) ist gleitbeweglich angefügt zu einer sich radial nach außen erschrecktem Flansch (431) einer Ansatzmutter (43), die die Kolbenbaugruppe (4) an der Kolbenstange (5) absichert.

## Revendications

1. Amortisseur hydraulique (1), en particulier un amortisseur de suspension hydraulique pour véhicule automobile, comprenant un tube (3) rempli de liquide de travail, un ensemble à piston (4) disposé de manière à pouvoir glisser dans le tube (3), divisant le tube en une chambre de détente (11) et une chambre de compression (12), doté d'assemblages de soupapes de détente (41) et de compression (42) pour contrôler l'écoulement du liquide de travail dans le tube pendant la course de détente et de compression de l'amortisseur (1), et fixé à un tige de piston (5) dirigée vers l'extérieur de l'amortisseur (1), une chambre de compensation de fluide (13) située à l'extérieur du tube (3), un assemblage de soupape de base (7) situé à l'extrémité de la chambre de compression (12) pour contrôler l'écoulement de fluide de travail entre la chambre de compression (12) et la chambre de compensation (13), et un assemblage d'arrêt de compression hydromécanique (8) afin de générer un effort d'amortissement supplémentaire à la fin de la course de compression et comprenant un élément de couverture (81) disposé dans ladite chambre de compression (12) et comprenant au moins un canal d'écoulement principal (811),
au moins un canal d'écoulement auxiliaire (85) entre la chambre de compression (12) et la chambre de compensation (13),
un ressort (83) pouvant coulisser avec l'ensemble à piston (4) et à son extrémité distale vers l'ensemble à piston (4) relié à des dispositifs aptes à fermer ledit au moins un canal d'écoulement principal (811) tout en engageant ledit élément de couverture (81),
dans lequel ledit assemblage d'arrêt de compression hydromécanique (8) comprend en outre
un agencement télescopique (82) fixé de manière coulissante à l'ensemble à piston (4) et comprenant au moins un manchon (821, 822), dans lequel le manchon le plus distal par rapport audit ensemble à piston (4) est un manchon d'engagement (822) et ledit dispositif apte à fermer ledit au moins un canal d'écoulement principal (811) sont prévus sur la base (8225) dudit manchon d'engagement (822), dans lequel ledit ressort (83) est comprimé entre l'ensemble à piston (4) et ladite base (8225) pour maintenir une position étendue dudit agencement télescopique (82) dans sa position désengagée,
**caractérisé en ce que** ladite base (8225) dudit manchon d'engagement (822) est munie d'au moins un canal (8256) et d'un élément de fermeture (84) disposé de manière coulissante à l'intérieur de ladite base (8225) dudit manchon d'engagement (822) et prévu avec un écran de fermeture (842) apte à fermer ledit au moins un canal d'écoulement principal (811) tout en engageant ledit élément de couverture (81), et un ressort (843) disposé entre ledit écran de fermeture (842) et ladite base (8225) pour maintenir une position étendue dudit écran de fermeture (842),
dans lequel au moins un manchon (821, 822) dudit agencement télescopique (82) est un élément unique comportant une bague annulaire (8211, 8221) reliée à un certain nombre de ponts axiaux (8212, 8222) disposés de manière équiangulaire, se terminant par des lèvres radiales (8214, 8224) pour un engagement radial avec l'ensemble à piston (4) ou le manchon contigu de l'agencement télescopique (82), et
dans lequel ledit élément de couverture (81) est fixé à l'assemblage de soupape de base (7).

2. Amortisseur selon l'une quelconque des revendications précédentes, **caractérisé en ce que** ledit élément de couverture (81) comprend ledit au moins un canal d'écoulement principal (811) situé au centre de celui-ci.

3. Amortisseur selon l'une quelconque des revendications précédentes, **caractérisé en ce que** ledit élément de couverture (81) comprend ledit au moins un canal d'écoulement auxiliaire (85), de préférence au voisinage de la surface interne du tube d'amortisseur (3).

4. Amortisseur selon l'une quelconque des revendications précédentes, **caractérisé en ce que** la surface d'écoulement en coupe transversale de tous les canaux d'écoulement auxiliaires (85) est inférieure à la surface d'écoulement en coupe transversale de tous les canaux d'écoulement principaux (811).

5. Amortisseur selon l'une quelconque des revendications précédentes, **caractérisé en ce que** l'extrémité du ressort (83) proximale à l'ensemble à piston (4) est disposée dans une chambre interne (432) de l'ensemble à piston (4).

6. Amortisseur selon l'une quelconque des revendications précédentes, **caractérisé en ce que** ledit agencement télescopique (82) est fixé de manière coulissante sur une bride s'étendant radialement vers l'extérieur (431) d'un écrou à épaulement (43) fixant l'ensemble à piston (4) sur la tige de piston (5).
